# EUROPÄISCHE PATENTANMELDUNG

(11) **EP 2 677 141 A1**
(43) Veröffentlichungstag der Anmeldung: **25.12.2013**
(21) Anmeldenummer: 12173033.7
(22) Anmeldetag: 21.06.2012
(51) Int. Cl.: F02D 13/02, F02B 25/04

(54) **Verfahren zum Betreiben eines Zweitakt-Grossdieselmotors sowie Zweitakt-Grossdieselmotor**

(71) Anmelder: Wärtsilä Schweiz AG, 8401 Winterthur (CH)
(72) Erfinder: Ryser, Raphael, 5430 Wettingen (CH); Schulz, Reiner Dr., 8303 Bassersdorf (CH); Knipström, Leif, 8408 Winterthur (CH); Schmitz, Peter, 8400 Winterthur (CH); Räss, Konrad, 8457 Humlikon (CH); Bühner, Alexander, 78247 Hilzingen (DE)
(74) Vertreter: Sulzer Management AG

(57) **Zusammenfassung**

Erfindungsgemäss wird ein Verfahren zum Betreiben eines Zweitakt-Grossdieselmotors (1) vorgeschlagen, mit mindestens einem Zylinder (12), welcher einen Brennraum (2) aufweist, der von einem hin- und herbewegbaren Kolben (3) begrenzt wird, wobei der Zylinder (12) ein Auslassventil (4) zum Abführen von Verbrennungsgasen und mindestens eine Einlassöffnung (5) zum Zuführen von Ladeluft aufweist, welche mittels des Kolben (3) geöffnet oder verschlossen wird. Der Zylinder (12) umfasst ferner mindestens ein Rezirkulationsventil (6), mit welchem Gase aus dem Brennraum (2) rückführbar sind und das Rezirkulationsventil (6) geöffnet wird, nachdem der Kolben (3) die Einlassöffnung (5) geöffnet hat, sodass die Einlassöffnung (5) eine Strömungsverbindung zum Brennraum (2) hat.

## Beschreibung

Die Erfindung betrifft ein Verfahren zum Betreiben eines Zweitakt-Grossdieselmotors sowie einen Zweitakt-Grossdieselmotor gemäss dem Oberbegriff des unabhängigen Anspruchs der jeweiligen Kategorie.

Zweitakt-Grossdieselmotoren werden heutzutage in einem sehr breiten Spektrum von Anwendungen eingesetzt, beispielsweise als Hauptantriebsmaschinen von Schiffen oder als stationäre Maschinen zum Betreiben von Generatoren zur lokalen stationären Stromgewinnung. Der grundlegende Aufbau der zentralen Komponenten des Zweitakt-Grossdieselmotors hat sich dabei trotz der verschiedenen Anwendungen wenig verändert.

Jeder Zweitakt-Grossdieselmotor umfasst in der Regel mehrere Zylinder mit jeweils einem Brennraum, der von einem hin- und herbewegbaren Kolben begrenzt wird, ein Auslassventil zum Abführen von Verbrennungsgasen und eine Einlassöffnung zum Zuführen von Ladeluft, die auch als Spülluft bezeichnet wird. Die Einlassöffnungen, die eine Strömungsverbindung zwischen einer Ladeluftquelle und dem Brennraum bilden, wobei die Ladeluftquelle beispielsweise als Einlassreceiver ausgebildet ist, werden mit dem hin- und herbewegbaren Kolben geöffnet und verschlossen, sodass die Steuerung der Zufuhr an Ladeluft mit dem Kolben erfolgt.

Da beim Betrieb von Grossdieselmotoren, insbesondere von Zweitakt-Grossdieselmotoren, im Allgemeinen beträchtliche Mengen an umweltbelastenden Stickstoffoxiden (NOx) entstehen, sind erhebliche Anstrengungen unternommen worden, um die NOx-Emission der Zweitakt-Grossdieselmotoren deutlich zu reduzieren. Da es bei Zweitakt-Grossdieselmotoren aber häufig aus Platzgründen sehr schwierig ist entsprechend dimensionierte Katalysatorvorrichtungen vorzusehen, hat sich die Entwicklung von NOx reduzierenden Massnahmen unter anderem auf die Entwicklung von sogenannten Primärmassnahmen konzentriert, bei welchen die Entstehung der NOx im Brennraum des Zylinders vermindert wird.

Bei einem aus dem Stand der Technik bekannten Verfahren zur Reduzierung der NOx-Emission in Zweitakt-Grossdieselmotoren wird das Schliessen des Auslassventils verzögert, um dadurch das Zeitintervall zwischen dem Schliessen der Einlassöffnung und dem Schliessen des Auslassventils zu verlängern. Das dem Verfahren zugrundeliegende Prinzip ist, dass aufgrund des verlängerten Zeitintervalls mehr Ladeluft über das Auslassventil entweicht und dadurch der Kompressionsdruck sinkt, sodass die Kompressionsendtemperatur im Brennraum niedriger ist. Um den benötigten Kompressionsdruck zu erreichen, wird beispielsweise der Einlassdruck der Ladeluft im Einlassreceiver beziehungsweise das Verdichtungsverhältnis erhöht. Da die Geometrie der Einlassöffnungen und die Turboladereffizienz unverändert sind, ändert sich trotz der Druckänderung der gesamte Luftmassenfluss durch den Zweitakt-Grossdieselmotor nicht, sondern es sinkt lediglich der Volumenfluss aufgrund der Dichteänderung und es kommt zu einer Rezirkulation von Gasen im Brennraum. Ausgehend davon ergeben sich bei Anwendung des beschriebenen Verfahrens zwei Effekte, welche die NOx-Emission reduzieren. Einerseits verbleiben aufgrund des gesunkenen Volumenflusses Gase im Brennraum, welche den Sauerstoffgehalt und somit die NOx-Entstehung reduzieren und andererseits wird die Entstehung von NOx während des Verbrennungsprozesses aufgrund des niedrigeren Niveaus der Kompressionsendtemperatur verhindert.

Ein Nachteil, welcher sich aus dem verlängerten Zeitintervall zwischen dem Schliessen der Einlassöffnung und dem Schliessen des Auslassventils ergibt, ist, dass mehr energiereiche Ladeluft aus dem Brennraum durch das Auslassventil ausströmt und als Abgas verloren geht. Ein Teil der ausströmenden energiereichen Ladeluft wird, um Energie zurückzugewinnen, über das Auslassventil an einen Turbolader geleitet, der einen Verdichter und eine Abgasturbine umfasst und dessen Abgasturbine die ausgelassene Ladeluft nutzt, um den Verdichter mit Energie zu versorgen. Da bei gleichbleibender Turboladereffizienz mehr energiereiche Ladeluft ausströmt werden grössere Turbolader benötigt, was mehr Gewicht und höhere Herstellkosten bedeutet, wodurch die gesteigerte Wirtschaftlichkeit und Effizienz durch das verzögerte Schliessen des Auslassventils wieder sinken und somit die Gesamteffizienz des Zweitakt-Grossdieselmotors sinkt.

Eine weitere bekannte Möglichkeit die NOx-Emissionen zu senken ist, anstatt herkömmliche Brennstoffe zu verbrennen, schwefelarme Brennstoffe, beispielsweise Gase, beispielsweise Erdgas, zu verbrennen. Da die Gase wesentlich "sauberer" verbrennen als herkömmliche Brennstoffe, wird durch diese die NOx-Emission in hohem Mass reduziert. Nachteil des mit Gas betriebenen Zweitakt-Grossdieselmotors ist, dass bei gleichbleibender Zylindergeometrie der Kompressionsdruck des Gases im Brennraum zu hoch wird und es zu einer unkontrollierten und ungewollten Selbstzündung des Brennstoffs kommt.

Eine weitere aus dem Stand der Technik bekannte Massnahme zur Reduktion von NOx-Emissionen ist in der DE10 2005 057 207 B4 beschrieben. Hierbei ist vorgesehen, innerhalb des Brennraums jedes Zylinders, zusätzlich zu einem Auslassventil, ein Rezirkulationsventil anzuordnen, über das mittels einer Rezirkulationsleitung die Verbrennungsgase in einen Rezirkulationsgas-Sammelraum, rückgeführt werden, um dann der Ladeluft beigemischt zu werden. Die Öffnungszeiten des Rezirkulationsventil beginnen und enden vor dem Öffnen der Einlassöffnungen des Zylinders und nach dem Schliessen bzw. vor dem Öffnen des Auslassventils.

Die beschriebene Vorrichtung führt Gase aus dem Brennraum zurück und speist diese wieder in die Ladeluft des nächsten Arbeitszyklus des Zweitakt-Grossdieselmotors ein. Da die Gase mit vergleichsweise hohem Druck erfolgt und die Rückführung der Gase in einen Rezirkulationsgas-Sammelraum erfolgt, sind keine zusätzlichen Massnahmen zur Druckerhöhung notwendig. Somit wird durch die Rückführung von Gasen, die noch brennbare Bestandteile enthalten, beim nächsten Arbeitszyklus die Selbstzündung beschleunigt und die Verbrennung verbessert, wodurch die Entstehung von NOx reduziert wird. Nachteil dieser Massnahme ist, dass ein Grossteil der Ladeluft über das Auslassventil entweicht, sodass unter Energieeffizienzaspekten die Wirkung der beschriebenen Massnahme gering, wenn nicht sogar negativ ist.

Ausgehend von diesem Stand der Technik, ist es eine Aufgabe der Erfindung, ein energieeffizienteres Verfahren zum Betreiben eines Zweitakt-Grossdieselmotors bereitzustellen, ohne dass dabei Zugeständnisse an die reduzierte NOx-Emissionen notwendig sind. Ferner ist es eine Aufgabe der Erfindung, einen entsprechenden Zweittakt-Grossdieselmotor bereitzustellen.

Die diese Aufgabe in apparativer bzw. verfahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Erfindungsgemäss wird also ein Verfahren zum Betreiben eines Zweitakt-Grossdieselmotors mit mindestens einem Zylinder, welcher einen Brennraum aufweist, der von einem hin- und herbewegbaren Kolben begrenzt wird vorgeschlagen, wobei der Zylinder ein Auslassventil zum Abführen von Verbrennungsgasen und mindestens eine Einlassöffnung zum Zuführen von Ladeluft aufweist, welche mittels des Kolben geöffnet oder verschlossen wird. Der Zylinder umfasst ferner mindestens ein Rezirkulationsventil, mit welchem Gase aus dem Brennraum rückführbar sind, und das Rezirkulationsventil geöffnet wird, nachdem der Kolben die Einlassöffnung geöffnet hat, sodass die Einlassöffnung eine Strömungsverbindung zum Brennraum hat.

Wesentlich für die Erfindung ist, dass der Zylinder mindestens ein Rezirkulationsventil umfasst, mit welchem Gase aus dem Brennraum, beispielsweise in die Ladeluft oder den Brennraum, rückführbar sind, und das Rezirkulationsventil geöffnet wird, nachdem der Kolben die Einlassöffnung geöffnet hat. Aufgrund der Strömungsverbindung, welche die Einlassöffnung zum Brennraum hat, werden durch das geöffnete Rezirkulationsventil, das beispielsweise als einfache Bohrung, als Ventil bzw. als ein Bauteil zur Absperrung bzw. zur Regelung des Durchflusses der Gase aus dem Brennraum ausgeführt ist, Gase aus dem Brennraum rückgeführt und für den nächsten Arbeitszyklus bereitgestellt.

Die erfindungsgemässe Lösung, ein energieeffizienteres Verfahren zum Betreiben eines Zweitakt-Grossdieselmotors bereitzustellen und die NOx-Emissionen zu reduzieren, ist verfahrenstechnisch besonders einfach, da die Erfindung die Rückführung von Gasen aus dem Brennraum bei geöffnetem Rezirkulationsventil ermöglicht. Die rückgeführten Gase aus dem Brennraum, die noch brennbare Bestandteile enthalten und ein Gemisch aus Ladeluft und Verbrennungsgase umfassen, stehen somit beim nächsten Arbeitszyklus zur Verfügung und beschleunigen die Selbstzündung, wodurch die Verbrennung verbessert und die Entstehung von NOx reduziert wird. Auch die erfindungsgemässe apparativ Lösung ist wenig aufwändig, da neue Zweitakt-Grossdieselmotoren nur mit einem Rezirkulationsventil und einer zusätzlichen Steuereinheit, welche die Steuerung und Regelung des Rezirkulationsventils übernimmt, auszustatten sind. Auch Zweitakt-Grossdieselmotoren mit einer vorhandenen Rezirkulationseinrichtung zur NOx-Reduktion können ohne komplizierte zusätzliche bauliche Massnahmen umgerüstet werden.

Im Speziellen wird das Rezirkulationsventil geöffnet, nachdem der Kolben die Einlassöffnung wieder verschlossen hat, sodass die Einlassöffnung keine Strömungsverbindung zum Zylinder hat. Bei dieser bevorzugten Massnahme wird die im Zylinder eingeströmte Ladeluft durch den Kolben aufgrund eines beginnenden Kompressionshubs nicht nur durch das Auslassventil, sondern, auch durch das Rezirkulationsventil gedrückt. Ein Öffnen des Rezirkulationsventils bei verschlossenen Einlassöffnungen ist besonders wirtschaftlich, da hierbei eine grosse Menge an Ladeluft rückgeführt wird, die normalerweise durch das Auslassventils ungenutzt abgeführt werden würde.

In der Praxis wird das Rezirkulationsventil geöffnet, nachdem der Kolben die Einlassöffnung wieder verschlossen hat, sodass die Einlassöffnung keine Strömungsverbindung zum Brennraum hat, und das Auslassventil geschlossen ist. Ferner wird das Rezirkulationsventil verschlossen, bevor Brennstoff in den Brennraum eingespritzt wird. Da das Rezirkulationsventil verschlossen wird, bevor Brennstoff in den Brennraum eingespritzt wird, können zwei Effekte zur NOx-Reduzierung genutzt werden. Einerseits werden bis kurz vor dem Entzünden des Brennstoff-Gas-Gemischs die Gase aus dem Brennraum rückgeführt und im nächsten Arbeitszyklus zur NOx-Reduktion genutzt und andererseits wird das Rezirkulationsventil derart geschlossen, dass der Volumenfluss reduziert ist und sauerstoffarme Gase im Brennraum für den nächsten Arbeitszyklus zur Verfügung stehen.

Diese Massnahme nutzt die bereits beschriebenen Effekte und ermöglicht es zusätzlich, das Rezirkulationsventil als Auslassventil zu nutzen, sodass mit dem Rezirkulationsventil ein vorgebbarer Kompressionsdruck im Zylinder durch Abführen der Ladeluft eingestellt wird. Dadurch wird es möglich, beispielsweise durch das zeitgleiche Schliessen des Auslassventils mit den Einlassöffnungen, die gesamte Ladeluft rückzuführen und somit den Wirkungsgrad und die Energieeffizenz des Zweitakt Grossdieselmotors zu verbessern. Ein weiterer Vorteil der beschriebenen Massnahme ist, dass die aus dem Stand der Technik bekannten Probleme eines Zweitakt-Grossdieselmotors der im Dual Fuel Action Modus betrieben wird durch die Erfindung gelöst werden, da mittels des Rezirkulationsventils der Kompressionsdruck des Brennstoffs im Zylinder derart beeinflusst werden kann, sodass eine Optimierung des Kompressionsdrucks für beide Brennstoffe mit einer festgelegten Zylindergeometrie möglich ist.

Eine Variante dieser Massnahme ist ein Zylinder mit zwei Reihen Einlassöffnungen, wobei je nach Brennstoff immer eine Reihe verschlossen ist und der Kolben die Einlassöffnungen an unterschiedlichen Zeitpunkt öffnet bzw. verschliesst, sodass die Kompressionsphase bei verschiedenen Brennstoffen unterschiedliche Zeitintervalle hat. Das Rezirkulationsventil könnte dann beispielsweise für ein fest eingestelltes Zeitintervall geöffnet werden. Das Verschliessen der Einlassöffnungen kann bei dieser Variante zum Beispiel mittels einer entlang des Zylinders verschiebbaren Hülse erfolgen.

In einem in der Praxis bewährten verfahrenstechnischen und apparativen Ausführungsbeispiel ist das Rezirkulationsventil mit einem Rezirkulationsbehälter verbunden, insbesondere mittels einer Rezirkulationsleitung, und die Gase aus dem Brennraum werden bei geöffnetem Rezirkulationsventil dem Rezirkulationsbehälter zugeführt. Ausserdem werden die Gase aus dem Brennraum, welche im Rezirkulationsbehälter gespeichert sind, in den Brennraum rückgeführt, insbesondere in die Einlassöffnung, wenn der Kolben die Einlassöffnung geöffnet hat und / oder mit einem Einlassdruck bereitgestellt werden, der so bemessen ist, dass im Zylinder ein vorgebbarer Kompressionsdruck erreicht wird.

Der Rezirkulationsbehälter ist im Allgemeinen als ein vom Zylinder getrennter Behälter zur Speicherung von Gasen ausgeführt, entspricht aber in einer Ausführungsvariante dem Einlassreceiver. Vorteil des Ausführungsbeispiels ist, dass die Rezirkulation der Gase in den Rezirkulationsbehälter erfolgt, wo die rezirkulierten Gase aus dem Brennraum für den nächsten Arbeitszyklus bereitgestellt werden. Die Rezirkulation der Gase aus dem Brennraum kann dabei direkt vom Rezirkulationsventil in den Rezirkulationsbehälter oder indirekt über eine Rezirkulationsleitung, die beispielsweise eine Stichleitung sein kann, und vom Rezirkulationsventil abgeht, in den Rezirkulationsbehälter erfolgen. Die Rückführung der Gase aus dem Rezirkulationsbehälter in den Brennraum bzw. die Ladeluft kann entweder über eine zusätzliche Einlassöffnung im Zylinder erfolgen, insbesondere über das Rezirkulationsventil, oder aber über die vorhandene Einlassöffnung. Da es sich bei den in den Rezirkulationsbehälter rezirkulierten Gasen aus dem Brennraum nicht nur um reine Ladeluft handelt, sondern auch um nach der Verbrennung vorhandene Verbrennungsgase, die noch brennbare Bestandteile enthalten, wird beim nächsten Arbeitstakt die Selbstzündung beschleunigt, die Verbrennung verbessert und zusätzlich aufgrund des reduzierten Sauerstoffgehalts der Effekt der NOx-Reduzierung vorteilhaft unterstützt.

Bei der Ausführungsvariante mit dem Einlassreceiver wird das Gemisch aus Ladeluft und Verbrennungsgasen zunächst in den Einlassreceiver rezirkuliert und dort für den nächsten Arbeitszyklus mit einem vorgebbaren Einlassdruck bereitstellt, wobei der Einlassdruck so bemessen ist, dass im Zylinder ein vorgebbarer Kompressionsdruck erreicht wird. Diese Variante hat den Vorteil, dass bei bekannten Öffnungszeiten des Auslass- und Rezirkulationsventils der Kompressionsdruck mittels des Einlassreceivers einstellbar ist.

Ein verfahrenstechnisch und apparativ einfaches Ausführungsbeispiel sieht vor, dass das Rezirkulationsventil eine Bohrung im Kolben umfasst und die Gase aus dem Brennraum der Ladeluft somit über diese Bohrung im Kolben zugeführt werden. Aufgrund der Bohrung im Kolben werden im Brennraum vorhandene Gase direkt in die Ladeluft des nächsten Arbeitstaktes rückgeführt, was in Hinblick auf die Wirtschaftlichkeit besonders vorteilhaft ist. Das Rezirkulationsventil kann hierbei, um die apparativen Veränderungen möglichst klein zu halten, beispielsweise als Sperrventil ausgeführt sein. Als spezielle Ausführungsvariante wird die Bohrung im Kolben, als Rezirkulationsventil und Einlassöffnung verwendet und auf die Einlassöffnungen im Zylinder verzichtet.

Erfindungsgemäss wird ferner ein Zweitakt-Grossdieselmotor mit mindestens einem Zylinder vorgeschlagen, welcher einen Brennraum aufweist, der von einem hin- und herbewegbaren Kolben begrenzt wird, wobei der Zylinder ein Auslassventil zum Abführen von Verbrennungsgasen und mindestens eine Einlassöffnung zum Zuführen von Ladeluft aufweist, welche mittels des Kolbens geöffnet oder verschlossen werden kann, wobei der Zylinder ferner mindestens ein Rezirkulationsventil umfasst, mit welchem Gase aus dem Brennraum rückführbar sind. Es ist eine Steuereinheit vorgesehen ist, welche das Rezirkulationsventil öffnet, nachdem der Kolben die Einlassöffnung geöffnet hat, sodass die Einlassöffnung eine Strömungsverbindung zum Brennraum hat.

Im Speziellen öffnet die Steuereinheit das Rezirkulationsventil nachdem der Kolben die Einlassöffnung verschlossen hat, sodass die Einlassöffnung keine Strömungsverbindung zum Zylinder hat. Vorzugsweise öffnet die Steuereinheit das Rezirkulationsventil, nachdem der Kolben die Einlassöffnung verschlossen hat, sodass die Einlassöffnung keine Strömungsverbindung zum Zylinder hat, das Auslassventil geschlossen ist und schliesst das Rezirkulationsventil, bevor Brennstoff in den Brennraum eingespritzt wird.

In der Praxis umfasst die Steuereinheit ein Gerät, beispielsweise einen Computer, eine speicherprogrammierbare Steuerung oder einen Regler, welches das Rezirkulationsventil signalgesteuert, gemäss den beschriebenen verfahrenstechnischen Massnahmen öffnet und schliesst. Vorteilhaft kann die Steuereinheit hierbei ein Teil der Steuerung des Zweitakt-Grossdieselmotors sein, aber auch als ein von dieser unabhängiges Gerät vorliegen.

Als spezielle Massnahme umfasst der Brennstoff des Zweitakt-Grossdieselmotors flüssigen und gasförmigen Brennstoff, der Zweitakt-Grossdieselmotor wird also im Dual Fuel Action Modus betrieben. Als flüssige Brennstoffe werden insbesondere Dieselkraftstoff, Gasöl und Schweröl verwendet, während als gasförmiger Brennstoff beispielsweise Erdgase verwendet wird.

Besonders bevorzugte Ausführungsbeispiele sind Zweitakt-Grossdieselmotoren, deren Rezirkulationsventil eine Öffnung im Zylinderkopf und / oder eine Öffnung im Brennraum umfasst. Ist das Rezirkulationsventil am Zylinderkopf angebracht, kann es beispielsweise als ein im Zylinderkopf befindliches Sitz- oder Tellerventil ausgeführt sein. Befindet sich das Rezirkulationsventil als Öffnung im Brennraum, kann es beispielsweise als Sperrventil ausgeführt sein, welches direkt oder indirekt mit dem Rezirkulationsbehälter, insbesondere mit dem Einlassreceiver, verbunden ist.

Als spezielle Massnahme ist der Kolben als Doppelkolben ausgeführt, sodass der Zylinder aufgrund des hin- und herbewegbaren Doppelkolbens zwei Brennräume mit einer Einlassöffnung umfasst, wobei die Einlassöffnung derart am Zylinder angeordnet ist, sodass der Zweitakt-Grossdieselmotor im Dual Fuel Action Modus betrieben wird. Jeder Brennraum wird somit für einen bestimmten Brennstoff verwendet und in jedem Brennraum wird der dem Brennstoff entsprechende Kompressionsdruck erreicht. Vorteil ist, dass für jeden Brennstoff die benötigte Zylindergeometrie in einem Zylinder realisiert ist. Somit sind zur Rezirkulation der Gase aus den Brennräumen für jeden Brennraum Rezirkulationsventile vorzusehen.

Im Folgenden wird die Erfindung anhand von Ausführungsbeispielen und anhand der Zeichnungen näher erläutert. Die schematischen und nicht massstäblichen Zeichnungen zeigen:
- Fig. 1:: den Aufbau eines Zylinders mit einem Rezirkulationsventil und einem Rezirkulationsbehälter eines Ausführungsbeispiels des erfindungsgemässen Zweitakt-Grossdieselmotors;
- Fig. 2:: ein Kreisdiagramm eines Arbeitszyklus, welches ein Ausführungsbeispiel des erfindungsgemässen Verfahrens zum Betreiben eines Zweitakt-Grossdieselmotors beschreibt;
- Fig. 3:: wie Fig. 1, aber für ein zweites Ausführungsbeispiel des erfindungsgemässen Zweitakt-Grossdieselmotors mit einem Rezirkulationsventil, das eine Öffnung im Zylinder umfasst, und
- Fig. 4:: ein drittes Ausführungsbeispiel des erfindungsgemässen Zweitakt-Grossdieselmotors, wobei das Rezirkulationsventil eine Bohrung im Zylinder umfasst.

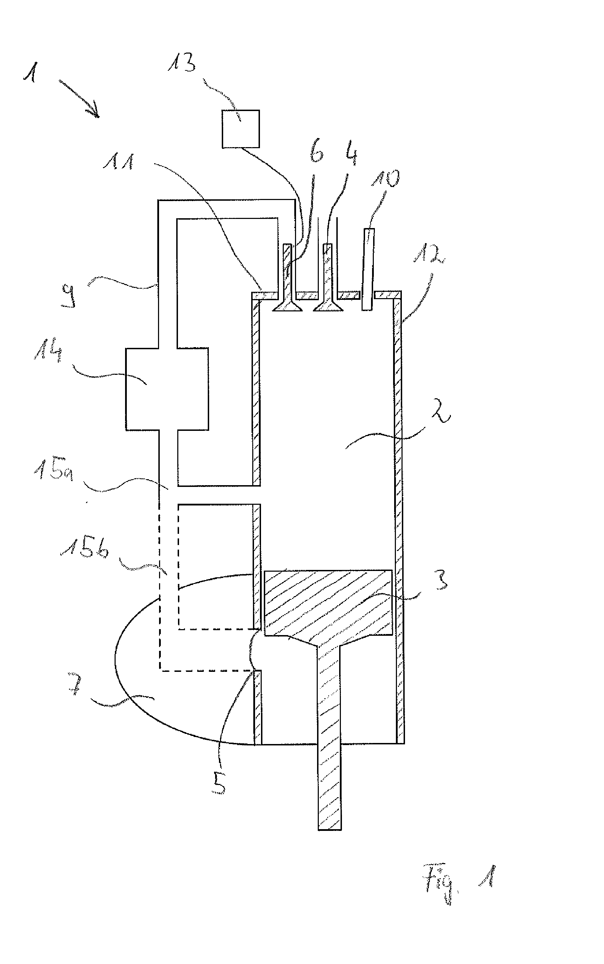

In der folgenden Beschreibung beziehen sich relative Lagebezeichnungen wie "oben, unten, oberhalb, unterhalb ..." auf die in den Figuren 1-4 dargestellte normale Gebrauchslage. Ferner wird begrifflich nicht zwischen Spül- und Ladeluft unterschieden.

Fig. 1 zeigt in einer schematischen Darstellung einen Zylinder 12 ein erstes Ausführungsbeispiels eines erfindungsgemässen Zweitakt-Grossdieselmotors, der gesamthaft mit dem Bezugszeichen 1 bezeichnet ist. Üblicherweise umfasst der Grossdieselmotor 1, der beispielsweise zum Antreiben eines Schiffs geeignet ist, mehrere solche Zylinder 12. Der Zylinder 12 weist einen Brennraum 2 auf, der von einem hin- und herbeweglichen Kolben 3 begrenzt wird.

Der Kolben 3 ist in an sich bekannter Weise mittels einer nicht dargestellten Kolbenstange mit einem Kreuzkopf (nicht dargestellt) verbunden, der andererseits an eine Schubstange (nicht dargestellt) angelenkt ist, die mit einer Kurbelwelle (nicht dargestellt) verbunden ist.

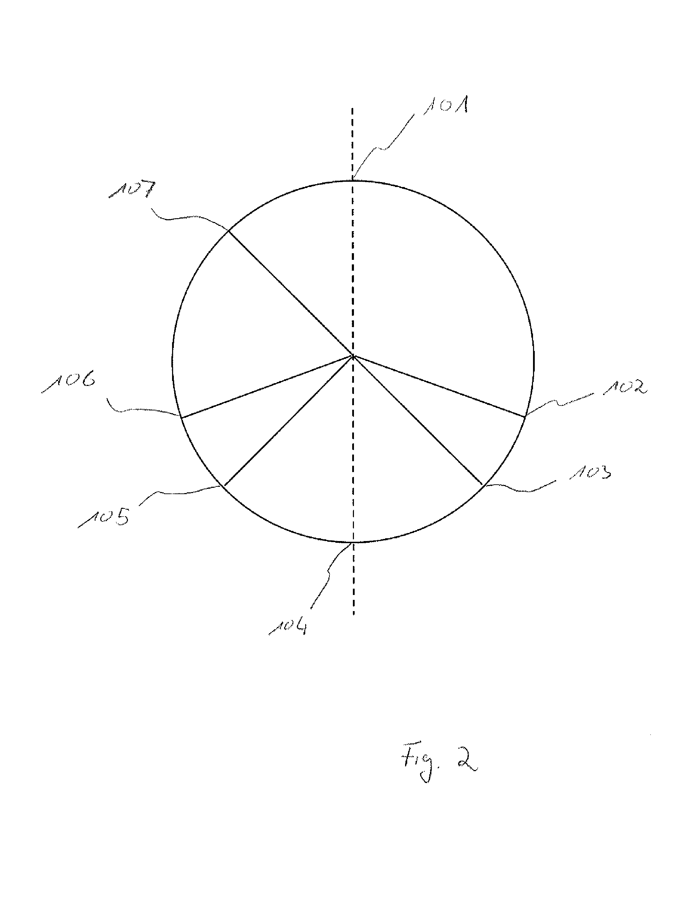

Bei der Beschreibung der Erfindung wird auf den Arbeitszyklus der periodischen Kolbenbewegung im Zylinder 12 Bezug genommen. Dieser Arbeitszyklus beginnt, wenn sich der Kolben 3 im oberen Umkehrpunkt (Totpunkt) befindet (minimales Brennraumvolumen). Anschliessend bewegt sich der Kolben 3 abwärts bis er den unteren Umkehrpunkt (Totpunkt) erreicht. Im anschliessenden Kompressionshub bewegt sich der Kolben 3 wieder aufwärts bis er den oberen Umkehrpunkt erreicht, wodurch ein kompletter Arbeitszyklus abgeschlossen wird. Bei der folgenden Beschreibung beziehen sich relative Angaben wie "bevor" oder "nachdem" auf einen solchen Arbeitszyklus (siehe auch Fig. 2 und die diesbezüglichen Erläuterungen).

Der Zylinder 12 wird an seiner darstellungsgemäss oberen Seite von einem Zylinderkopf 11 abgeschlossen. Im Zylinderkopf 11 ist ein Auslassventil 4 zum Abführen von Verbrennungsgasen vorgesehen, wobei die Verbrennungsgase, je nach Stellung des Auslassventils 4, welches den Durchgang zwischen einem Brennraum 2 und einem Abgassystem verschliesst oder öffnet, aus dem Brennraum 2 des Zylinders 1 in das Abgassystem (nicht dargestellt) abströmen.

Im darstellungsgemäss unteren Bereich des Zylinders 12 ist eine Einlassöffnung 5, die beispielsweise als Spülluftschlitze ausgestaltet sind und durch die Ladeluft, welche Frischluft ist und auch als Spülluft bezeichnet wird, in den Zylinder 12 einbringbar ist. Somit strömt Ladeluft, sobald der Kolben 3 bei seinem Expansionshub, der darstellungsgemäss nach unten erfolgt, die Einlassöffnung 5 passiert und eine Strömungsverbindung zum Brennraum 2 entsteht, durch die Einlassöffnung 5 in den Brennraum 2 des Zylinders 12 ein. Beim anschliessenden Kompressionshub verschliesst der Kolben 3 die Einlassöffnung 5, sodass keine Strömungsverbindung zwischen Einlassreceiver 7 und Brennraum 2 besteht und keine weitere Ladeluft in den Brennraum 2 des Zylinders 12 gelangen kann.

Eine oder - wie für Grossdieselmotoren üblich - mehrere Brennstoffeinspritzdüsen 10, durch welche Brennstoff in den Zylinder 12 einbringbar ist, sind ebenfalls im Zylinderkopf 11 angeordnet. Bei dem hier beschriebenen Ausführungsbeispiel ist ferner mindestens ein Rezirkulationsventil 6 vorgesehen, wobei das Rezirkulationsventil 6 eine Öffnung im Zylinderkopf 11 umfasst und beispielsweise als Sitz- oder Tellerventil bzw. als ein Bauteil zur Absperrung ausgeführt ist, welches zur Steuerung beziehungsweise Regelung des Durchflusses dient. Das Rezirkulationsventil 6 und ein Rezirkulationsbehälter 14 sind ausserdem mittels einer Rezirkulationsleitung 9 miteinander verbunden, sodass Gase aus dem Brennraum 2 bei geöffnetem Rezirkulationsventil 6 durch die Rezirkulationsleitung 9 in den Rezirkulationsbehälter 14 strömen kann.

Die Beschickung des Zylinders 12 mit Ladeluft kann zum Beispiel mit einem nicht dargestellten Turbolader erfolgen, der eine Abgasturbine und einen Verdichter umfasst. Solche Turbolader sind an sich hinreichend bekannt und werden deshalb hier nur kurz erläutert. Die durch das Auslassventil 4 ausströmenden Verbrennungsgase gelangen zunächst zu einem Abgasreceiver (nicht dargestellt), in dem üblicherweise die Verbrennungsgase mehrerer Zylinder zusammengeführt werden. Von dort strömen die Gase zu der Abgasturbine des Turboladers und treiben diese an. Die Abgasturbine wiederum treibt den Verdichter an, der Frischluft ansaugt und diese komprimiert. Vom Verdichter gelangt die Frischluft durch einen Ladeluftkühler (nicht dargerstellt) zu einem Einlassreceiver 7, der üblicherweise mit mehreren Zylindern 12 verbunden ist und über welchen die Ladeluft an den Einlassöffnungen 5 bereitgestellt wird. Der Druck, mit welchen die Ladeluft an den Einlassöffnungen 5 vorliegt, ist der sogenannte Einlassdruck, der derart bemessen ist, dass im Zylinder 12 ein vorgebbarer Kompressionsdruck erreicht wird.

Bei dem erfindungsgemässen Grossdieselmotor 1 ist eine Steuereinheit 13 vorgesehen, beispielsweise ein Computer, eine speicherprogrammierbare Steuerung oder einen Regler, die das Rezirkulationsventil 6 signalgesteuert öffnet und schliesst. Erfindungsgemäss wird das Rezirkulationsventil 6 derart angesteuert, dass das Rezirkulationsventil 6 geöffnet wird, nachdem der Kolben 3 die Einlassöffnung 5 geöffnet hat und eine Strömungsverbindung zwischen Einlassreceiver 7 und Brennraum 2 entsteht, wodurch über das Rezirkulationsventil 6 Gase aus dem Brennraum 2 rückgeführt werden. Als spezielle Massnahme ist, vorgesehen, dass das Rezirkulationsventil 6 mit einem Rezirkulationsbehälter 14 verbunden ist, insbesondere mittels einer Rezirkulationsleitung 9, und / oder die Gase aus dem Brennraum 2 bei geöffnetem Rezirkulationsventil 6 dem Rezirkulationsbehälter 14 zugeführt werden, also die Rückführung der Gase aus dem Brennraum 2 in den Rezirkulationsbehälter 14 erfolgt.

Die durch das Rezirkulationsventil 6 rückgeführten Gase bestehen aus einem Gemisch von Ladeluft sowie energiereichen und sauerstoffarmen Verbrennungsgasen und stehen in den folgenden Arbeitszyklen für den Verbrennungsprozess zur Verfügung. Im vorliegenden Ausführungsbeispiel werden die Gase aus dem Brennraum 2, welche im Rezirkulationsbehälter 14 gespeichert sind, in den Brennraum 2 rückgeführt werden, insbesondere in die Einlassöffnung 5 rückgeführt, wenn der Kolben 3 die Einlassöffnung 5 geöffnet hat und / oder mit einem Einlassdruck bereitgestellt, der so bemessen ist, dass im Zylinder 12 ein vorgebbarer Kompressionsdruck erreicht wird. Die Rückführung der Gase aus dem Rezirkulationsbehälter 14 erfolgt entweder mittels einer Leitung zurück in den Brennraum 2 (Leitung 15a mit durchgezogener Linie) beziehungsweise als Ausführungsvariante in die Einlassöffnung 5 (Leitung 15b mit gestrichelter Linie).

Als weitere verfahrenstechnisch und apparative Massnahme mit dem gleichen Ausführungsbeispiel, kann das Öffnen des Rezirkulationsventil 6 erfolgen, nachdem der Kolben 3 die Einlassöffnung 5 verschlossen hat, sodass die Einlassöffnung 5 keine Strömungsverbindung zum Brennraum 2 hat. Dabei öffnet die Steuereinheit 13 das Rezirkulationsventil 6, nachdem der Kolben 3 die Einlassöffnung 5 verschlossen hat. Ein in der Praxis bewährte Variante ist die Kombination der beschriebenen Massnahmen, wobei das Rezirkulationsventil 6 geöffnet wird, nachdem der Kolben 3 die Einlassöffnung 5 verschlossen hat, sodass die Einlassöffnung 5 keine Strömungsverbindung zum Brennraum 2 hat, das Auslassventil 4 geschlossen ist und das Rezirkulationsventil 6 verschlossen wird, bevor Brennstoff in den Brennraum 2 eingespritzt wird. Das Öffnen bzw. Schliessen des Rezirkulationsventils 6 durch die Steuereinheit 13 erfolgt bei dieser Variante, nachdem der Kolben 3 die Einlassöffnung 5 verschlossen hat (Öffnen) bzw. bevor Brennstoff in den Brennraum 2 eingespritzt wird (Schliessen).

Der Zweitakt-Grossdieselmotor 1 wird, je nach Bedarf und Anwendung, mit unterschiedlichen Brennstoffen betrieben, wobei der Brennstoff für den Zweitakt-Grossdieselmotor 1 flüssigen und gasförmigen Brennstoff umfasst. Diese vorteilhafte Massnahme ermöglicht es, dass der Zweitakt-Grossdieselmotor 1 in einem Dual Fuel Action Modus betrieben wird, also mit zwei unterschiedlichen Brennstoffen, nämlich flüssigem, beispielsweise Diesel oder Schweröl, und gasförmigem Brennstoff, beispielsweise Erdgas, betrieben wird. Dabei ist vorgesehen, dass im laufenden Betrieb und je nach Bedarf zwischen verschiedenen Betriebsmodi, hier den beiden Kraftstoffarten, auf Knopfdruck hin- und hergeschaltet werden kann.

Eine weitere, nicht gezeigte, spezielle Massnahme ist den Kolben 3 als Doppelkolben auszuführen, sodass der Zylinder 12 aufgrund des hin- und herbewegbaren Doppelkolbens zwei Brennräume 2 mit einer Einlassöffnung 5 umfasst. Dabei ist die Einlassöffnung 5 derart am Zylinder 12 angeordnet, sodass der Zweitakt-Grossdieselmotor 1 im Dual Fuel Action Modus betrieben werden kann. Jeder Brennraum 2 wird somit für einen bestimmten Brennstoff verwendet und in jedem Brennraum 2 wird der dem Brennstoff entsprechende Kompressionsdruck erreicht. Vorteil ist, dass für jeden Brennstoff die benötigte Zylindergeometrie in einem Zylinder 12 realisiert ist. Wird die erfindungsgemässe Lösung umgesetzt, sind zur Rezirkulation der Gase aus den Brennräumen 2 für jeden Brennraum 2 Rezirkulationsventile 6 vorzusehen.

Wesentlich bei den beschriebenen Massnahmen ist, das bei geöffnetem Rezirkulationsventil 6 die Rückführung von Gasen aus dem Brennraum 2 erfolgt, die aus einem Gemisch von Ladeluft und energiereichen und sauerstoffarmen Gase bestehen, und für den Verbrennungsprozess im nächsten Arbeitszyklus bereitgestellt werden. Durch die Nutzung der rezirkulierten Gase werden in den folgenden Arbeitszyklen die Verbrennungsprozesse deutlich energieeffizienter und es entstehen weniger NOx wodurch der Zweitakt-Grossdieselmotor 1 im Betrieb weniger umweltbelastende Schadstoffe produziert. Ausserdem können durch die Nutzung der Gase aus dem Brennraum 2 einzelne Komponenten bzw. Baugruppen, beispielsweise der Turbolader, deutlich kleiner dimensioniert werden, oder es kann eine geringere Anzahl vorgesehen werden. Dies ist insbesondere aus Platzgründen und unter wirtschaftlichen Aspekten ein Vorteil.

Fig. 2 zeigt ein Kreisdiagramm des Arbeitszyklus, welches ein Ausführungsbeispiel des erfindungsgemässen Verfahrens zum Betreiben eines Zweitakt-Grossdieselmotors 1 veranschaulicht.

Anhand der Fig. 2 werden im Folgenden zunächst der Aufbau des Kreisdiagramms und der Ablauf des Arbeitszyklus erklärt und anschliessend die verfahrenstechnischen Massnahmen des Ausführungsbeispiels des erfindungsgemässen Verfahrens erläutert.

Wenn sich der Kolben 3 im Bereich seines oberen Totpunkts 101 befindet, entzündet sich das Brennstoff-Gas-Gemisch. Der Kolben 3 führt einen Expansionshub aus, das heisst er bewegt sich darstellungsgemäss (siehe Fig. 1) nach unten. Im Verlauf dieses Expansionshubs wird das Auslassventil 5 am Punkt 102 durch eine Ventilsteuerung geöffnet, sodass die Verbrennungsgase aus dem Zylinder 12 strömen können. Sobald die Oberkante des Kolbens 3 die Einlassöffnungen 5 passiert, also am Punkt 103 des Kreisdiagramms, beginnt die vom Einlassreceiver 7 bereitgestellte Ladeluft in den Zylinder 12 zu strömen. Nachdem der Kolben 3 den unteren Totpunkt 104 durchlaufen hat, beginnt der Kompressionshub des Kolbens 3, das heisst er bewegt sich darstellungsgemäss (siehe Fig. 1) nach oben. Sobald die Oberkante des Kolbens 3 die Einlassöffnungen 5 passiert, was im Kreisdiagramm dem Punkt 105 entspricht, verschliesst der Kolben 3 diese, sodass keine weitere Ladeluft in den Innenraum des Zylinders 2 bzw. Brennraum 2 gelangen kann. Im Verlauf des weiteren Kompressionshubs wird das Auslassventil 5 am Punkt 106 geschlossen, sodass kein Gas mehr durch dieses austreten kann. Die eigentliche Kompression der Luft im Zylinder 12 beginnt. Wenn sich der Kolben 3 am Punkt 107 befindet, kurz vor Erreichen seines oberen Totpunkts, erfolgt die Einspritzung des Brennstoffs mittels der Brennstoffeinspritzdüse(n) 10 in das Gasgemisch im Brennraum. Nach der Verbrennung beginnt dann der beschriebene Arbeitszyklus von neuem.

Erfindungsgemäss wird das Rezirkulationsventil 6 geöffnet, nachdem der Kolben 3 die Einlassöffnung 5 geöffnet hat, also irgendwo ab Punkt 103. Somit beginnt ab dem Öffnen der Einlassöffnungen 5 die vom Einlassreceiver 7 bereitgestellte Ladeluft in den Zylinder 12 zu strömen und über das Rezirkulationsventil 6 wieder auszuströmen, wobei die im Brennraum 2 vorhandenen Gase rückgeführt werden.

In einer bevorzugten Ausführungsvariante wird das Rezirkulationsventil 6 später im Arbeitszyklus geöffnet, nämlich nachdem der Kolben 3 die Einlassöffnung 5 verschlossen hat, also ab dem Punkt 105 des Kreisdiagramms, sodass die Einlassöffnung 5 keine Strömungsverbindung zum Zylinder 12 hat. Vorteil dieser Massnahme ist, dass der Kolben 3 bereits den unteren Totpunkt 104 durchlaufen und der Kompressionshub des Kolbens 3 bereits begonnen hat, wodurch die Gase aus dem Brennraum 2 in das Rezirkulationsventil 5 strömen. Verschlossen wird das Rezirkulationsventil 6, bevor Brennstoff in den Brennraum 2 eingespritzt wird, also im Bereich des Punkt 107 des Kreisdiagramms.

Das Zeitintervall, in welchem das Rezirkulationsventil 6 geöffnet ist, liegt zwischen dem Öffnen der Einlassöffnung 5 am Punkt 103 und vor dem Einlassen des Brennstoffs am Punkt 107 des Kreisdiagramms. Innerhalb eines Arbeitszyklus zwischen den Punkte 103 und 107 im Kreisdiagramm kann die Rückführung von Gasen aus dem Brennraum 2 erfolgen und beliebig variiert werden. Vorteilhaft können hierbei die normalerweise als Abgase abgeführten sauerstoffarmen Verbrennungsgase und die energiereiche Ladeluft rückgeführt und energieeffizient in späteren Arbeitszyklen eingesetzt werden, wodurch sich der Wirkungsgrad des Zweitakt-Grossdieselmotors 1 erhöht. Zusätzlich entstehen durch die Nutzung der rezirkulierten Gase weniger Stickoxide im nächsten Arbeitszyklus, da durch das Einspritzen des Brennstoffs in dieses sauerstoffarme Gasgemisch, bei der Verbrennung deutlich weniger Stickstoffoxide entstehen.

Eine besonders vorteilhafte Massnahme ist es, dass das Rezirkulationsventil 6 geöffnet ist, während das Auslassventil 4 am Punkt 106 geschlossen wird. Dadurch wird das Rezirkulationsventil 6 als Auslassventil 4 genutzt, wodurch der Kompressionsdruck im Zylinder 12 gesteuert wird und gleichzeitig Gase aus dem Brennraum 2 rückgeführt werden. Insbesondere ist das zeitgleiche Schliessen des Auslassventils 4 mit dem Schliessen der Einlassöffnungen 5 möglich, d.h. die Punkte 105 und 106 des Kreisdiagramms liegen in einem sehr kleinen Zeitintervall, sodass ein Grossteil im Brennraum 2 vorhandenen Gase rezirkuliert wird.

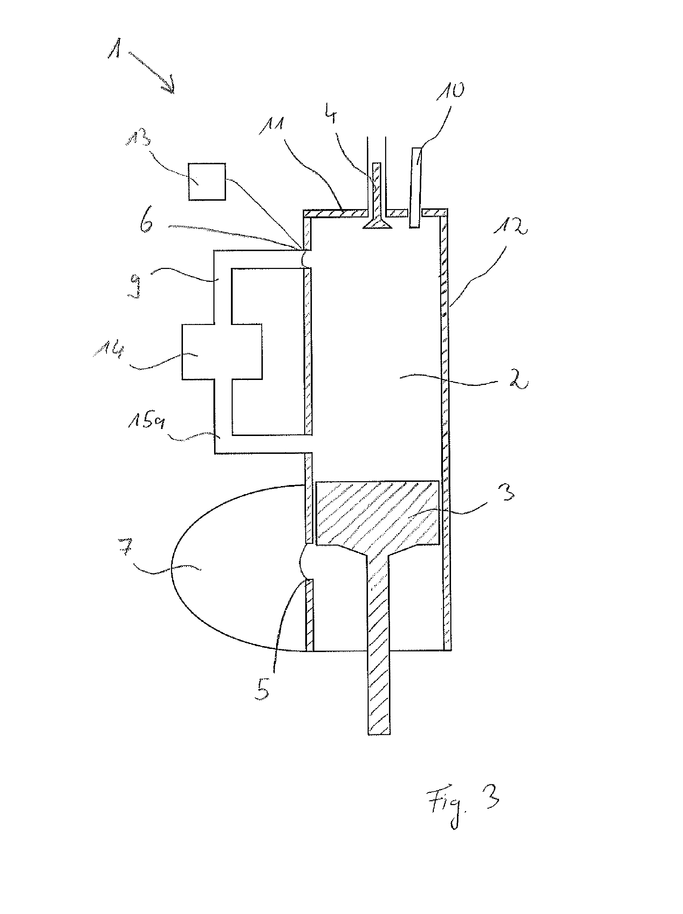

In den Fig. 3 ist schematisch ein weitere Ausführungsvariante des erfindungsgemässen Zweitakt-Grossdieselmotors 1 mit Rezirkulationsventil 6 und Rezirkulationsbehälter 14 dargestellt, wobei, im Gegensatz zu Fig. 1 das Rezirkulationsventil 6 eine Öffnung im Brennraum 2 umfasst.

Fig. 3 entspricht im wesentlichen Fig. 1, ausser das im gezeigten Ausführungsbeispiel das Rezirkulationsventil 6 keine Öffnung im Zylinderkopf 11, sondern eine Öffnung im Brennraum 2 umfasst, welches direkt oder indirekt mit dem Einlassreceiver 7 verbunden ist. Da dieses Ausführungsbeispiel apparativ sehr einfach umzusetzen ist, beispielsweise kann die Öffnung eine Bohrung im Zylinder 12 und das Rezirkulationsventil 6 als Sperrventil ausgeführt sein, ist diese spezielle Vorrichtung, unter wirtschaftlichen Aspekten sehr vorteilhaft.

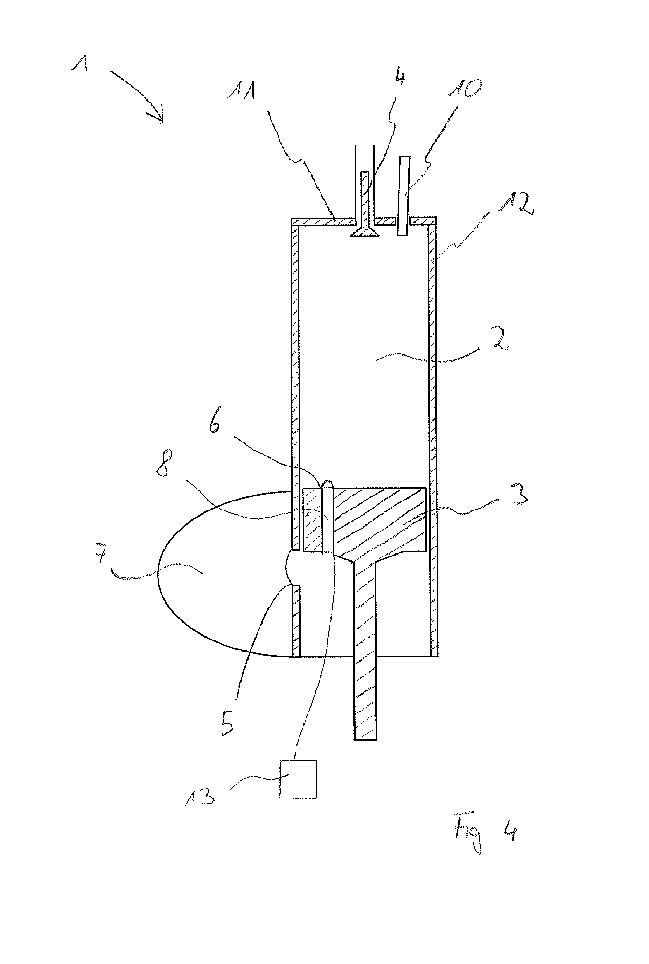

Bei dem in Fig. 4 schematisch dargestellten Ausführungsbeispiel ist eine weitere, etwas andere Ausführung des Rezirkulationsventils 6 zu sehen. Dabei werden die Gase aus dem Brennraum 2 über eine Bohrung 8 im Kolben 3 direkt der Ladeluft zugeführt. In Hinblick auf die Wirtschaftlichkeit ist dieses Ausführungsbeispiel sehr vorteilhaft das es verfahrenstechnisch und apparativ besonders einfach zu realisieren ist. Aufgrund der Bohrung 8 im Kolben 3 werden die im Brennraum 2 vorhandenen Gase direkt in die Ladeluft des nächsten Arbeitszyklus rückgeführt, weshalb keine Rezirkulationsleitung 9 bzw. kein Rezirkulationsbehälter 14 benötigt wird.

## Patentansprüche

1. Verfahren zum Betreiben eines Zweitakt-Grossdieselmotors mit mindestens einem Zylinder (12), welcher einen Brennraum (2) aufweist, der von einem hin- und herbewegbaren Kolben (3) begrenzt wird, wobei der Zylinder (12) ein Auslassventil (4) zum Abführen von Verbrennungsgasen und mindestens eine Einlassöffnung (5) zum Zuführen von Ladeluft aufweist, welche mittels des Kolben (3) geöffnet oder verschlossen wird, wobei der Zylinder (12) ferner mindestens ein Rezirkulationsventil (6) umfasst, mit welchem Gase aus dem Brennraum (2) rückführbar sind, **dadurch gekennzeichnet, dass** das Rezirkulationsventil (6) geöffnet wird, nachdem der Kolben (3) die Einlassöffnung (5) geöffnet hat, sodass die Einlassöffnung (5) eine Strömungsverbindung zum Brennraum (2) hat.

2. Verfahren nach Anspruch 1, wobei das Rezirkulationsventil (6) geöffnet wird, nachdem der Kolben (3) die Einlassöffnung (5) wieder verschlossen hat, sodass die Einlassöffnung (5) keine Strömungsverbindung zum Brennraum (2) hat.

3. Verfahren nach Anspruch 1 oder 2, wobei das Rezirkulationsventil (6) geöffnet wird, nachdem der Kolben (3) die Einlassöffnung (5) verschlossen hat, sodass die Einlassöffnung (5) keine Strömungsverbindung zum Brennraum (2) hat, das Auslassventil (4) geschlossen ist und das Rezirkulationsventil (6) verschlossen wird, bevor Brennstoff in den Brennraum (2) eingespritzt wird.

4. Verfahren nach einem der vorangehenden Ansprüche, wobei das Rezirkulationsventil (6) mit einem Rezirkulationsbehälter (14) verbunden wird, insbesondere mittels einer Rezirkulationsleitung (9), und / oder die Gase aus dem Brennraum (2) bei geöffnetem Rezirkulationsventil (6) dem Rezirkulationsbehälter (14) zugeführt werden.

5. Verfahren nach einem der vorangehenden Ansprüche, wobei die Gase aus dem Brennraum (2), welche im Rezirkulationsbehälter (14) gespeichert sind, in den Brennraum (2) rückgeführt werden, insbesondere in die Einlassöffnung (5) rückgeführt werden, wenn der Kolben (3) die Einlassöffnung (5) geöffnet hat und / oder mit einem Einlassdruck bereitgestellt werden, der so bemessen ist, dass im Zylinder (12) ein vorgebbarer Kompressionsdruck erreicht wird.

6. Verfahren nach einem der vorangehenden Ansprüche, wobei der Ladeluft die Gase aus dem Brennraum (2) über eine Bohrung (8) im Kolben (3) zugeführt werden.

7. Zweitakt-Grossdieselmotor mit mindestens einem Zylinder (12), welcher einen Brennraum (2) aufweist, der von einem hin- und herbewegbaren Kolben (3) begrenzt wird, wobei der Zylinder (12) ein Auslassventil (4) zum Abführen von Verbrennungsgasen und mindestens eine Einlassöffnung (5) zum Zuführen von Ladeluft aufweist, welche mittels des Kolbens (3) geöffnet oder verschlossen werden kann, wobei der Zylinder (12) ferner mindestens ein Rezirkulationsventil (6) umfasst, mit welchem Gase aus dem Brennraum (2) rückführbar sind, **dadurch gekennzeichnet, dass** eine Steuereinheit (13) vorgesehen ist, welche das Rezirkulationsventil (6) öffnet, nachdem der Kolben (3) die Einlassöffnung (5) geöffnet hat, sodass die Einlassöffnung (5) eine Strömungsverbindung zum Brennraum (2) hat.

8. Zweitakt-Grossdieselmotor nach Anspruch 7, wobei die Steuereinheit (13) das Rezirkulationsventil (6) öffnet, nachdem der Kolben (3) die Einlassöffnung (5) wieder verschlossen hat, sodass die Einlassöffnung (5) keine Strömungsverbindung zum Brennraum (2) hat.

9. Zweitakt-Grossdieselmotor nach Anspruch 7 oder 8, wobei die Steuereinheit (13) das Rezirkulationsventil (6) öffnet, nachdem der Kolben (3) die Einlassöffnung (5) verschlossen hat, sodass die Einlassöffnung (5) keine Strömungsverbindung zum Brennraum (2) hat, das Auslassventil (4) geschlossen ist und das Rezirkulationsventil (6) schliesst, bevor Brennstoff in den Brennraum (2) eingespritzt wird.

10. Zweitakt-Grossdieselmotor nach einem der vorangehenden Ansprüche, wobei der Brennstoff für den Zweitakt-Grossdieselmotor (1) flüssigen und gasförmigen Brennstoff umfasst.

11. Zweitakt-Grossdieselmotor nach einem der vorangehenden Ansprüche, wobei das Rezirkulationsventil (6) eine Öffnung (9) im Zylinderkopf (11) umfasst.

12. Zweitakt-Grossdieselmotor nach einem der vorangehenden Ansprüche, wobei das Rezirkulationsventil (6) eine Bohrung (8) im Kolben umfasst.

13. Zweitakt-Grossdieselmotor nach einem der vorangehenden Ansprüche, wobei das Rezirkulationsventil (6) eine Öffnung im Brennraum (2) umfasst.

14. Zweitakt-Grossdieselmotor nach einem der vorangehenden Ansprüche, wobei das Rezirkulationsventil (6) mit einem Rezirkulationsbehälter (14) verbunden ist, insbesondere mittels einer Rezirkulationsleitung (9), und /oder die Gase aus dem Brennraum (2) bei geöffnetem Rezirkulationsventil (6) dem Rezirkulationsbehälter (14) zugeführt werden.

15. Zweitakt-Grossdieselmotor nach einem der vorangehenden Ansprüche, wobei die Gase aus dem Brennraum (2), welche im Rezirkulationsbehälter (14) gespeichert sind, in den Brennraum (2) rückführbar sind, insbesondere in die Einlassöffnungen (5) rückführbar sind, wenn der Kolben (3) die Einlassöffnung (5) geöffnet hat, und / oder mit einem Einlassdruck bereitgestellt werden, der so bemessen ist, dass im Zylinder (12) ein vorgebbarer Kompressionsdruck erreicht wird.
